# EUROPÄISCHE PATENTANMELDUNG

(11) **EP 3 865 615 A1**
(43) Veröffentlichungstag der Anmeldung: **18.08.2021**
(21) Anmeldenummer: 21155141.1
(22) Anmeldetag: 04.02.2021
(51) Int. Cl.: D06F 35/00

(54) **VERFAHREN ZUM BETREIBEN EINES WASSERFÜHRENDEN ELEKTRISCHEN GERÄTS UND WASSERFÜHRENDES ELEKTRISCHES GERÄT AUFWEISEND EINE ELEKTROCHEMISCHE ZELLE ZUR ERZEUGUNG VON BLEICHMITTEL**

(30) Priorität: 12.02.2020 DE 102020103651
(71) Anmelder: Miele & Cie. KG, 33332 Gütersloh (DE)
(72) Erfinder: Strothoff, Werner, 48336 Sassenberg (DE)

(57) **Zusammenfassung**

Die Erfindung betrifft ein Verfahren zum Betreiben eines wasserführenden elektrischen Geräts (1) mit einer Bleicheinrichtung (2) und einer elektrochemischen Zelle (3) mit einer in einem Kathodenraum (31) angeordneten Kathode und einer in einem Anodenraum (32) angeordneten Anode, die räumlich getrennt sind, aufweisend folgende Schritte während eines Reinigungsprogramms, das einen Waschvorgang und einen oder mehrere Spülvorgänge aufweist
a) Bereitstellen einer Lösung in der elektrochemischen Zelle (3), die Wasser und einen Elektrolyten aufweist;
b) Anlegen von Strom an die elektrochemische Zelle (3) und gleichzeitiges Einleiten eines sauerstoffhaltigen Gases, um ein Bleichmittel in einem Katholyten zu erzeugen; und
c) Zuführen des Katholyten aus der elektrochemischen Zelle (3) in die Bleicheinrichtung (2) vor und/oder während der Durchführung des Waschvorgangs.

Ferner betrifft die Erfindung ein wasserführendes elektrisches Gerät (1) mit einer Bleicheinrichtung (2), einer elektrochemischen Zelle (3) mit einer Kathode (31) und einer Anode (32), die räumlich getrennt sind, und einer Steuer- oder Regeleinrichtung, die eingerichtet und ausgebildet ist, einen in dem Kathodenraum (31) bei Betrieb der elektrochemischen Zelle erzeugten Katholyten aus der elektrochemischen Zelle (3) der Bleicheinrichtung (2) zuzuführen.

## Beschreibung

Die Erfindung betrifft ein Verfahren zum Betreiben eines wasserführenden elektrischen Geräts und ein wasserführendes elektrisches Gerät. Insbesondere betrifft die Erfindung ein Verfahren zum Betreiben eines wasserführenden elektrischen Geräts, bei dem eine Reinigung unter Verwendung eines Bleichmittels erzielt werden soll und ein wasserführendes elektrisches Gerät, das eine Reinigung unter Verwendung eines Bleichmittels ausführt.

Aus der EP 1 991 651 A1 ist bekannt, einen pH-Wert einer Reinigungslösung während eines Reinigungsvorgangs zur Reinigung einer Oberfläche oder eines Textils zu kontrollieren. Dadurch soll den diversen Inhaltsstoffen der Reinigungslösung die Möglichkeit gegeben werden, ihre Wirkung vollständig entfalten zu können, um eine erhöhte Reinigungsleistung zu erzielen. Die Reinigungslösung weist eine Perhydrolase, Wasserstoffperoxid und ein Esterhaltiges Substrat für das Enzym auf. Das Wasserstoffperoxid kann dabei als Substanz eingesetzt werden, in-situ chemisch mittels Percarbonaten oder Perboraten, elektrochemisch mittels einer Brennstoffzelle in Verbindung mit Sauerstoff und Wasserstoff oder enzymatisch mittels Glucose in Verbindung mit Glucoseoxidase erzeugt werden. Die Menge der Perhydrolase und des Substrats ist derart gewählt, dass ein schwach alkalischer pH-Wert der Reinigungslösung zu einem sauren pH-Wert geändert wird. Dadurch wird Schmutz besser entfernt. Es besteht aber immer noch ein Bedarf an einer verbesserten Reinigungsleistung.

Der Erfindung stellt sich somit das Problem ein Verfahren zum Betreiben eines wasserführenden elektrischen Geräts und ein wasserführendes elektrisches Gerät mit einer optimierten Reinigungsleistung bereitzustellen.

Erfindungsgemäß wird dieses Problem durch ein Verfahren mit den Merkmalen des Patentanspruchs 1 und ein wasserführendes elektrisches Gerät mit den Merkmalen des Patentanspruchs 5 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer besseren Reinigungs- bzw. und Bleichwirkung darin, dass der alkalische pH-Wert der Reinigungslösung das Risiko von Lochfrasskorrosion bei Edelstahl, wenn Edelstahl in der Bleicheinrichtung des wasserführenden elektrischen Gerät verbaut ist, reduziert, wenn erhöhte Chlorid-Gehalte in der Reinigungslösung vorhanden sind.

Die Erfindung betrifft ein Verfahren zum Betreiben eines wasserführenden elektrischen Geräts mit einer Bleicheinrichtung und einer elektrochemischen Zelle mit einer in einem Kathodenraum angeordneten Kathode und einer in einem Anodenraum angeordneten Anode, die räumlich getrennt sind, aufweisend folgende Schritte während eines Reinigungsprogramms, das einen Waschvorgang und einen oder mehrere Spülvorgänge aufweist
a) Bereitstellen einer Lösung in der elektrochemischen Zelle, die Wasser und einen Elektrolyten aufweist;
b) Anlegen von Strom an die elektrochemische Zelle und gleichzeitiges Einleiten eines sauerstoffhaltigen Gases, um ein Bleichmittel in einem Katholyten zu erzeugen; und
c) Zuführen des Katholyten aus der elektrochemischen Zelle in die Bleicheinrichtung vor und/oder während der Durchführung des Waschvorgangs.

In Schritt a) wird eine Wasser- und Elektrolyt-haltige Lösung in der elektrochemischen Zelle bereitgestellt, wobei die Lösung in der elektrochemischen Zelle angeordnet oder durch sie geleitet werden kann. Der Elektrolyt kann ein anorganisches Salz und/oder einen Builder aufweisen bzw. aus ihm oder ihnen bestehen. Bevorzugt ist das anorganische Salz Natriumsulfat und/oder Natriumhydrogencarbonat. In einer bevorzugten Ausführungsform weist der Builder eine oder mehrere Komponenten auf, ausgewählt aus der Gruppe, bestehend aus Zitronensäure, Milchsäure, Phosphonat, Polycarbonsäure, Aminocarbonsäure, Polyacrylsäure und/oder deren Salze. Alternativ bevorzugt besteht der Builder aus einer oder mehreren der vorstehend genannten Komponenten.

Wenn in dem Schritt b) das sauerstoff-haltiges Gas der elektrochemischen Zelle, die bevorzugte eine Gasdiffusionselektrode im Kathodenraum aufweist, zugeführt wird und Strom an sie angelegt wird, startet eine Elektrolyse, bei der Wasserstoffperoxid gebildet wird. Durch die räumliche Trennung des Kathoden- und Anodenraums werden der Anolyt und der Katholyt separat voneinander hergestellt. Der pH-Wert des Katholyten wird in den alkalischen pH-Bereich verschoben, während ein pH-Wert des Anolyten in den sauren pH-Bereich verschoben wird. Wenn der Anodenraum und der Kathodenraum nicht getrennt sein würden, würden sich der Katholyt und der Anolyt zumindest teilweise neutralisieren, was sich als unvorteilhaft erwiesen hat. Bevorzugt liegt ein pH-Wert des Katholyten im Bereich von 9 bis 14, bevorzugter 10 bis 12.

In Schritt c) wird nur der Katholyt der Bleicheinrichtung zugeführt. D.h., der Katholyt wird der Bleicheinrichtung ohne einen in dem Schritt b) erzeugten Anolyten zugeführt. Der Katholyt ist Anolyt-frei.

Während des Waschvorgangs wird Reinigungsgut oder die Bleicheinrichtung selber mit dem erzeugten Bleichmittel und ggf. weiteren Inhaltsstoffen der Lösung gewaschen, um es zu reinigen. Während des einen oder mehreren Spülvorgangs wird das Reinigungsgut oder die Bleicheinrichtung selber mit Wasser gespült, um die Lösung aus der Bleicheinrichtung und ggf. dem Reinigungsgut heraus zu spülen.

In einer bevorzugten Ausführungsform weist das Verfahren weiterhin einen Schritt Zuführen des in dem Schritt b) erzeugten Anolyten aus der elektrochemischen Zelle in die Bleicheinrichtung nach der Durchführung eines Waschvorgangs auf. Bevorzugt wird der in dem Schritt b) erzeugte Anolyt der Bleicheinrichtung vor und/oder während der Durchführung eines Spülvorgangs aus der elektrochemischen Zelle zugeführt. Durch Einsetzen der sauren Anolyt-Lösung in einen der Spülgänge können sich ggf. gebildete Kalkablagerungen in dem wasserführenden elektrischen Gerät und/oder auf dem Reinigungsgut wieder aufgelöst werden. Die Hygiene wird gesteigert, da in dem wasserführenden elektrischen Gerät sowohl alkalische als auch saure pH-Werte, während eines Wasch- und Spülzyklus durchlaufen werden. Der Anolyt wird daher sinnvoll genutzt.

Alternativ bevorzugt weist das Verfahren weiterhin einen Schritt Leiten des in dem Schritt b) erzeugten Anolyten aus der elektrochemischen Zelle in einen Abwasserkanal auf. Der Abwasserkanal ist nicht Teil des wasserführenden elektrischen Geräts; der Anolyt wird also verworfen. Dies kann aus Kostengründen vorteilhaft sein.

Bevorzugt wird der in Schritt b) hergestellte Katholyt in einem Vorlagebehälter bevorratet. Alternativ oder zusätzlich wird der in Schritt b) hergestellte Anolyt in einem weiteren Vorlagebehälter bevorratet. Durch die Bevorratung kann das wasserführende elektrische Gerät den erzeugten Katholyten und/oder den erzeugten Anolyten bei Bedarf einsetzen. Dadurch können der Katholyt und der Anolyt beispielsweise getrennt voneinander der Bleicheinrichtung während des Reinigungsprozesses zugegeben werden. Zudem ist es weiterhin möglich, das Verfahren derart auszuführen, dass der Kathodenraum und/oder der Anodenraum jeweils gespeist von dem Vorlagebehälter bzw. dem weiteren Vorlagebehälter über einen vorbestimmten Zeitraum durchströmt wird bzw. werden. Dadurch kann ein Umsatz verbessert werden.

Neben dem Wasser und dem Elektrolyten wird bevorzugt der elektrochemischen Zelle und/oder der Bleicheinrichtung weiterhin ein Bleichaktivator separat zu oder gemeinsam mit dem Wasser und/oder Elektrolyten zugeführt, der mit dem in der elektrochemischen Zelle erzeugten Bleichmittel teilweise oder vollständig zu einem weiteren Bleichmittel reagiert. Das weitere Bleichmittel wird auch als aktivierte Bleiche bezeichnet. Beispielsweise weist die aktivierte Bleiche Peroxyessigsäure als Reaktionsprodukt der Reaktion von Wasserstoffperoxid mit dem Bleichaktivator auf. In dem alkalischen pH-Bereich reagiert das Wasserstoffperoxid vollständig oder teilweise mit dem verwendeten Bleichkatalysator zu Peroxyessigsäure. Wenn der Anodenraum und Kathodenraum nicht getrennt sind, so dass sich Anolyt und Katholyt vermischen, wird der saure Anolyt die Umsetzung des Bleichaktivators mit dem Wasserstoffperoxid verhindern oder zumindest reduzieren. Mittels des erfindungsgemäßen Verfahrens erfolgt eine optimale Umsetzung des Bleichaktivators und dadurch wird eine bessere Wasch- und Bleichwirkung erzielt. Beispiele für einen Bleichaktivator sind N-Acetylcaprolactam, Triacetin, Propylenglycoldiacetat oder Triethylcitrat. Bevorzugt ist der Bleichaktivator Acetylcaprolactam oder Triacetin. Weiterhin kann der elektrochemischen Zelle und/oder der Bleicheinrichtung ein Enzym wie Arylesterase separat zu oder gemeinsam mit dem Bleichaktivator zugeführt werden, um seine Umsetzung zu unterstützen.

Neben dem Wasser und dem Elektrolyten und ggf. dem Bleichaktivator kann der elektrochemischen Zelle und/oder der Bleicheinrichtung bevorzugt direkt der Bleicheinrichtung weiterhin eine oder mehrere weitere Lösungen separat oder teilweise oder vollständig gemeinsam zugeführt werden. Die eine oder mehreren weiteren Lösungen können alle üblichen Inhaltsstoffe für Reinigungsmittel vorzugsweise zum Waschen von Wäsche oder Spülen von Geschirr, medizinischen Geräten oder Laborgeräten aufweisen. Beispiele für übliche Inhaltsstoffe sind Tenside, Schauminhibitoren, Enzymstabilisatoren, Farbübertragungsinhibitoren, Vergrauungsinhibitoren, Komplexbildner, Sequestriermittel, Builder, optische Aufheller, UV-Absorber, Verdickungsmittel, Ionenaustauscher, Wasserenthärter und/oder Farb- und Duftstoffe. Beispielsweise ist dem wasserführenden elektrischen Gerät extern oder intern eine Dosiervorrichtung mit mehreren Dosiereinrichtungen zugeordnet, so dass Wasser, Elektrolyt, ggf. Bleichaktivator ggf. über die elektrochemische Zelle und ggf. weitere Inhaltsstoffe der Bleicheinrichtung getrennt voneinander oder zusammen zugeführt werden können. Eine Steuer- und Regeleinrichtung des wasserführenden elektrischen Geräts ist bevorzugt ausgebildet, die Zufuhr entsprechend Vorgaben aus einem von einem Nutzer des Geräts ausgewählten Reinigungsprogramms zu steuern oder zu regeln.

Die Erfindung betrifft ferner ein wasserführendes elektrisches Gerät mit einer Bleicheinrichtung, einer elektrochemischen Zelle mit einer in einem Kathodenraum angeordneten Kathode und einer in einem Anodenraum angeordneten Anode, die räumlich getrennt sind, und einer Steuer- oder Regeleinrichtung, die eingerichtet und ausgebildet ist, den bei Betrieb der elektrochemischen Zelle in dem Kathodenraum erzeugten Katholyten aus der elektrochemischen Zelle der Bleicheinrichtung zuzuführen. Der Anodenraum und der Kathodenraum sind bevorzugt mittels einer Membran bevorzugter Kationenaustauschmembran räumlich getrennt.

Zu dem Verfahren beschriebene Ausführungsformen und Vorteile gelten für das wasserführende elektrische Gerät gleichermaßen und umgekehrt.

Bevorzugt ist die Steuer- oder Regeleinrichtung eingerichtet und ausgebildet, der Bleicheinrichtung vor und/oder während des Waschvorgangs den bei Betrieb der elektrochemischen Zelle in dem Kathodenraum erzeugten Katholyten aus der elektrochemischen Zelle zuzuführen. Bevorzugt ist die Steuer- oder Regeleinrichtung eingerichtet und ausgebildet, den bei Betrieb der elektrochemischen Zelle in dem Anodenraum erzeugte Anolyten aus der elektrochemischen Zelle der Bleicheinrichtung zeitversetzt zum Katholyten bevorzugt während eines oder mehrerer Spülvorgänge zuzuführen oder aus dem wasserführenden elektrischen Gerät zu entfernen.

Bevorzugt ist die Steuer- oder Regeleinrichtung weiterhin eingerichtet und ausgebildet, das vorstehend beschriebene Verfahren gemäß einer oder mehreren der vorstehend beschriebenen Ausführungsformen auszuführen.

Bevorzugt weist die elektrochemische Zelle eine Gasdiffusionselektrode auf. Weist die elektrochemische Zelle Wasser und Luft auf und fließt ein elektrischer Strom, wird an der Anode der elektrochemischen Zelle Wasser oxidiert, wobei Protonen entstehen und der pH-Wert sinkt. An der Kathode der elektrochemischen Zelle, insbesondere der Gasdiffusionselektrode, wird zugleich der in der Luft enthaltene Sauerstoff reduziert. Hierbei werden die Protonen verbraucht und Wasserstoffperoxid entsteht. Die Kathode ist bevorzugt als eine Sauerstoffdiffusionselektrode ausgebildet. Die Anode ist bevorzugt als Mischoxidelektrode ausgebildet. Das Reaktionsprodukt ist bevorzugt eine alkalische Wasserstoffperoxid-Lösung. Der Kathodenraum weist bei Betrieb bevorzugt einen Gasraum, dem das Sauerstoff-haltige Gas zugeführt wird, die Gasdiffusionselektrode und den Katholyten auf, in dem Wasserstoffperoxid gebildet wird, während der Anodenraum bei Betrieb bevorzugt die Elektrode und den Anolyten aufweist. Dem Kathodenraum wird bevorzugt Luft oder Sauerstoff als Stauerstoff-haltiges Gas zugeführt. Dem Anoden- und Kethodenraum wird die Wasser- und Elektrolyt-haltige Lösung zugeführt.

In einer bevorzugten Ausführungsform ist der Kathodenraum über eine Leitung mit der Bleicheinrichtung verbunden und ist der Anodenraum über eine Leitung mit einem zu dem wasserführenden elektrischen Gerät externen Abwasserkanal verbunden. Alternativ bevorzugt ist der Kathodenraum über eine Leitung mit der Bleicheinrichtung verbunden und ist der Anodenraum mit der Bleicheinrichtung verbunden. Bevorzugt weist das wasserführende elektrische Gerät weiterhin einen Vorlagebehälter auf, der fluidtechnisch zwischen dem Kathodenraum und der Bleicheinrichtung angeordnet ist. Alternativ oder zusätzlich bevorzugt weist das wasserführende elektrische Gerät weiterhin einen weiteren Vorlagebehälter auf, die der fluidtechnisch zwischen dem Anodenraum und der Bleicheinrichtung angeordnet ist. Bevorzugt ist der Vorlagebehälter leitungstechnisch im Kreislauf mit dem Kathodenraum verbunden, so dass der Kathodenraum von sich in dem Vorlagebehälter befindenden Katholyten über einen vorbestimmten Zeitraum durchströmt werden kann. Alternativ oder zusätzlich ist der weitere Vorlagebehälter leitungstechnisch im Kreislauf mit dem Anodenraum verbunden, so dass der Anodenraum von sich in dem weiteren Vorlagebehälter befindenden Anolyten über einen vorbestimmten Zeitraum durchströmt werden kann.

In einer bevorzugten Ausführungsform weist das wasserführende elektrische Gerät weiterhin einen Wassertank auf, der mit der elektrochemischen Zelle verbunden ist, so dass der elektrochemischen Zelle Wasser aus dem Wassertank zuführbar ist. Dadurch kann die elektrochemische Zelle mit Wasser beispielsweise im Anschluss an eine Elektrolyse gespült werden.

Bevorzugt weist das wasserführende elektrische Gerät weiterhin eine Dosiervorrichtung mit einer oder mehreren Dosiereinrichtungen auf, wobei eine oder mehrere Dosiereinrichtungen mit der elektrochemischen Zelle verbunden sind. Weiterhin können eine oder mehrere Dosiereinrichtungen direkt mit der Bleichkammer verbunden sein. Die Dosiereinrichtungen lassen sich bevorzugt separat von der Steuer- oder Regeleinrichtung steuern oder regeln.

In einer bevorzugten Ausführungsform ist das wasserführende elektrische Gerät als ein Waschautomat, ein Geschirrspüler oder Desinfektor ausgebildet. Die Waschmaschine, der Desinfektor und der Geschirrspüler weisen Bleicheinrichtungen auf, weil sie sich insbesondere zum Bleichen, Reinigen und/oder Desinfizieren von Reinigungsgut wie Wäsche oder Geschirr, medizinischen Instrumenten oder Laborgeräten eignen. Aber auch andere wasserführende elektrische Geräte weisen eine Bleicheinrichtung auf, weil sie mit der Zeit verkeimen und zum Bleichen, Reinigen und/oder Desinfizieren von sich selber eingesetzt werden. Die Bleicheinrichtung kann daher auch eine Vorrichtung sein, deren Hauptanliegen es nicht ist, Gegenstände zu reinigen, sondern die durch Gebrauch verkeimt und selber in Zeitabständen gereinigt werden muss und daher zeitweise zumindest teilweise als Bleicheinrichtung verwendet wird, um selbst gereinigt zu werden. Die Bleicheinrichtung stellt daher eine Einrichtung dar, die geeignet ist, durch Inbetriebnahme Gegenstände zu reinigen oder sich selber zu reinigen, um ihrer Verkalkung, Verdreckung und/oder Verkeimung vorzubeugen. Ein Beispiel hierfür ist eine Kaffeemaschine.

Im Sinne der Erfindung umfasst der Ausdruck "wasserführendes elektrisches Gerät" auch CIP- (Cleaning-in-place-) Anlagen oder dergleichen, die beispielsweise in der Hospitalhygiene und Lebensmittelindustrie eingesetzt werden. Die Erfindung betrifft daher auch ein Verfahren zum Betreiben eines Geräts, bei dem verfahrenstechnische Anlagen wie beispielsweise pharmazeutische Anlagen oder biologische Anlagen gereinigt werden, was in der Regel ortsgebunden durchgeführt wird. Die zu reinigende Anlage stellt in diesem Fall die Bleicheinrichtung dar. Vor Durchführung des erfindungsgemäßen Verfahrens wird dann die elektrochemische Zelle mit der zu reinigenden Anlage vorzugsweise über eine Leitung verbunden.

Ein Ausführungsbeispiel der Erfindung ist in den Zeichnungen rein schematisch dargestellt und wird nachfolgend näher beschrieben. Es zeigt schematisch und nicht maßstabsgerecht
- Fig. 1: eine Schnittansicht eines wasserführenden elektrischen Geräts gemäß einer ersten Ausführungsform;
- Fig. 2: eine Schnittansicht eines wasserführenden elektrischen Geräts gemäß einer zweiten Ausführungsform;
- Fig. 3: eine Teilansicht des in Fig. 2 gezeigten wasserführenden elektrischen Geräts; und
- Fig. 4: eine Teilansicht eines wasserführenden elektrischen Geräts gemäß einer dritten Ausführungsform.

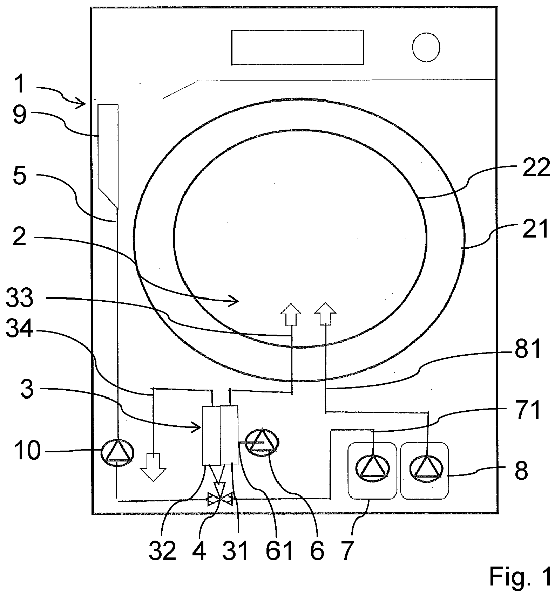

Fig. 1 zeigt eine Schnittansicht eines wasserführenden elektrischen Geräts gemäß einer ersten Ausführungsform. Das wasserführende elektrisches Gerät 1 weist eine Bleicheinrichtung 2 und eine elektrochemische Zelle 3 auf. Die elektrochemische Zelle 3 weist eine in einem Kathodenraum 31 angeordneten Kathode (nicht gezeigt) und eine in einem Anodenraum 32 angeordnete Anode (nicht gezeigt). Der Kathodenraum 31 und der Anodenraum 32 sind räumlich getrennt beispielsweise durch eine Membran (nicht gezeigt). Das wasserführende elektrische Gerät 1 ist rein beispielhaft als eine Waschmaschine dargestellt.

Die Bleicheinrichtung 2 weist einen Laugenbehälter 21 und eine Trommel 22 auf. Ferner weit das wasserführende elektrische Gerät 1 einen Wassertank 9 auf, der über eine Leitung 5 und eine Pumpe 10 mit der elektrochemischen Zelle 3 verbunden ist, so dass der elektrochemischen Zelle 3 Wasser aus dem Wassertank 9 mittels Aktivieren der Pumpe 10 zuführbar ist. Weiterhin weist das wasserführende elektrische Gerät 1 eine Dosiervorrichtung mit zwei Dosiereinrichtungen 7, 8 auf. Die eine Dosiereinrichtung 7 ist über eine Dosierleitung 71 und über ein Ventil 4 sowohl mit dem Kathodenraum 31 als auch dem Anodenraum 32 der elektrochemischen Zelle 3 verbunden, während die weitere Dosiereinrichtung 8 über eine weitere Dosierleitung 81 mit der Bleicheinrichtung 2 verbunden ist. Der Anodenraum 32 ist weiterhin über eine Leitung 34 mit einem zu dem wasserführenden elektrischen Gerät 1 externen Abwasserkanal (nicht gezeigt) verbunden, während der Kathodenraum 31 über eine Leitung 33 mit der Bleicheinrichtung 2 verbunden ist.

Der Kathodenraum 31 ist weiterhin mit einer Gaspumpe 6 über eine Gaszufuhrleitung 61 verbunden. Ferner weist das wasserführende elektrische Gerät 1 eine Steuer- oder Regeleinrichtung (nicht gezeigt) auf, die eingerichtet und ausgebildet ist, ein Reinigungs- bzw. Waschprogramm zu steuern oder zu regeln, das von einem Nutzer (nicht gezeigt) aus mehreren in ihr hinterlegten Reinigungsprogrammen (nicht gezeigt) ausgewählt werden kann. Ein Waschprogramm einer Waschmaschine weist üblicherweise einen Waschvorgang zum Waschen von sich in der Trommel 2 befindender Wäsche (nicht gezeigt), eine oder mehrere Spülphasen zum Spülen der Wäsche und ggf. eine Schleuderphase zum Schleudern der Wäsche auf.

Bei Betrieb wird ein Verfahren mit folgenden Schritten durchgeführt:
a) Bereitstellen einer Lösung in der elektrochemischen Zelle 3, die Wasser und einen Elektrolyten aufweist;
b) Anlegen von Strom an die elektrochemische Zelle 3 und gleichzeitiges Einleiten eines sauerstoffhaltigen Gases, um ein Bleichmittel in einem Katholyten zu erzeugen; und
c) Zuführen des Katholyten aus der elektrochemischen Zelle 3 in die Bleicheinrichtung 2 vor und/oder während eines Waschvorgangs.

In dem Schritt a) wird insbesondere das sich in der Dosiereinrichtung 7 befindende Lösung über die Dosierleitung 71 und das Ventil 4 dem Kathodenraum 31 und dem Anodenraum 32 zugeführt.

In dem Schritt b) wird insbesondere Luft oder Sauerstoff als sauerstoffhaltiges Gas aus der Gaspumpe 6 über die Gaszufuhrleitung 61 dem Kathodenraum 31 zugeführt und Strom an die elektrochemische Zelle 3 beispielsweise durch Aktivieren der elektrochemischen Zelle 3 mittels der Steuer- oder Regeleinrichtung angelegt.

In dem Schritt c) wird insbesondere der in dem Schritt c) erzeugte Wasserstoffperoxid als Bleichmittel enthaltende Katholyt aus der elektrochemischen Zelle 3 in die Bleicheinrichtung 2 über die Leitung 33 zugeführt. Insbesondere wird der Katholyt der Bleicheinrichtung 2 vor und/oder während der Waschphase zugeführt.

Neben den Schritten a) bis c) wird weiterhin ein Schritt Verwerfen eines in dem Anodenraum 32 bei Betrieb der elektrochemischen Zelle 3 erzeugten Anolyten mittels Leiten des Anolyten in den Abwasserkanal über die Leitung 34 durchgeführt.

Zusätzlich zu den vorstehend erwähnten Schritten kann der Bleicheinrichtung 2 weiterhin aus der weiteren Dosiereinrichtung 8 eine weitere Lösung über die Dosierleitung 81 zugeführt werden. Insbesondere wird die weitere Lösung der Bleicheinrichtung 2 während der Waschphase zugeführt, wobei die Zuführung zeitgleich oder zeitversetzt zur Zuführung des Katholyten erfolgen kann.

Zudem kann zusätzlich zu den beschriebenen Schritten der elektrochemischen Zelle 3 Wasser aus dem Wassertank 9 zugeführt werden. Dies kann zur Verdünnung der Wasser- und Elektrolyt-haltigen Lösung erfolgen. Alternativ oder zusätzlich kann das Zuführen des Wassers im Anschluss an eine in der elektrochemischen Zelle 3 durchgeführten Elektrolyse erfolgen, um die elektrochemische Zelle 3 mittels Spülen mit Wasser zu reinigen.

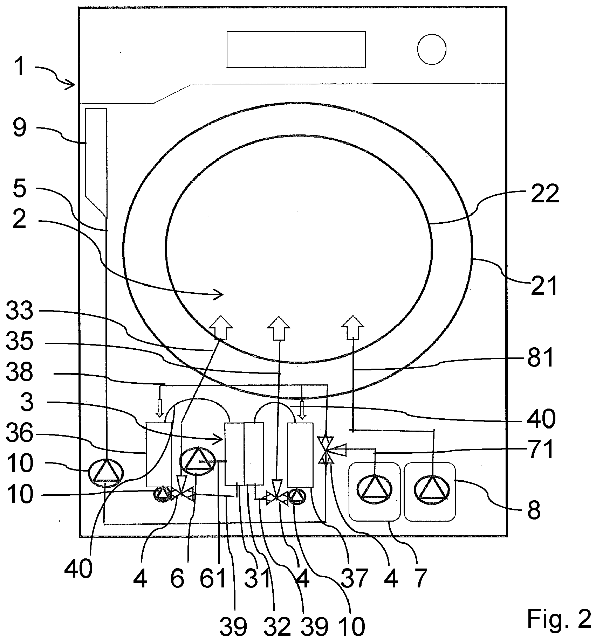

Fig. 2 zeigt eine Schnittansicht eines wasserführenden elektrischen Geräts gemäß einer zweiten Ausführungsform. Das in Fig. 2 gezeigte wasserführende elektrische Gerät 1 entspricht dem in Fig. 1 gezeigten wasserführenden elektrischen Gerät mit dem Unterschied, dass es weiterhin einen Vorlagebehälter 36 und einen weiteren Vorlagebehälter 37 aufweist. Die Dosiereinrichtung 7 ist über die Vorlagebehälter 36, 37 mittels einer Leitung 38 mit der elektrochemischen Zelle 3 verbunden ist. Der Vorlagebehälter 36 ist mit dem Kathodenraum 31 und der weitere Vorlagebehälter 37 ist mit dem Anodenraum 33 jeweils über eine weitere Leitung 40 verbunden, während die Bleicheinrichtung 2 mittels der Leitung 33 und eine darin integrierte Pumpe 10 und ein darin integriertes Ventil 4 über den Vorlagebehälter 36 mit dem Kathodenraum 31 verbunden ist und mittels der Leitung 35 und eine darin integrierte Pumpe 10 und ein darin integriertes Ventil 4 über den weiteren Vorlagebehälter 37 mit dem Anodenraum 31 verbunden ist. Über jeweils eine weitere Leitung 39 und die jeweilige Pumpe 10 und das jeweilige Ventil 4 ist ferner der Vorlagebehälter 36 mit dem Kathodenraum 31 und der weitere Vorlagebehälter 37 mit dem Anodenraum 32 verbunden. Der Wassertank 9 ist mit der elektrochemischen Zelle 3 über den Vorlagebehälter 36 bzw. dem weiteren Vorlagebehälter 37 verbunden.

Bei Betrieb wird das in Bezug auf Fig. 1 beschriebene Verfahren wie vorstehend durchgeführt mit dem Unterschied, dass in dem Schritt a) das sich in der Dosiereinrichtung 7 befindende Lösung über die Dosierleitung 71 und das Ventil 4 und über den Vorlagebehälter 36 bzw. den weiteren Vorlagebehälter 37 dem Kathodenraum 31 bzw. dem Anodenraum 32 zugeführt wird und dass der Anolyt nicht verworfen wird, sondern in einem weiteren Schritt während eines Spülvorgangs der Bleicheinrichtung 2 zugeführt wird.

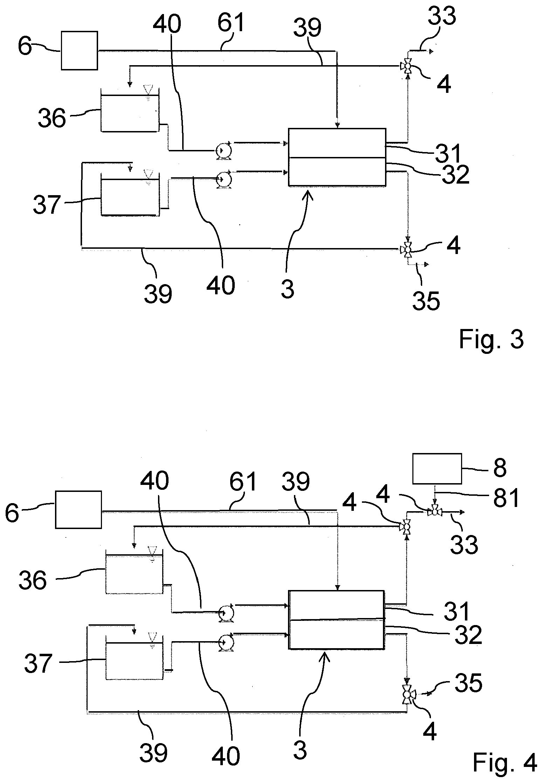

Fig. 3 zeigt eine Teilansicht des in Fig. 2 gezeigten wasserführenden elektrischen Geräts. Gezeigt ist die elektrochemische Zelle 3 mit dem Kathodenraum 31 und dem Anodenraum 32 und den weiteren Leistungen 39, 40, die sie jeweils mit dem Vorlagebehälter 36 bzw. dem weiteren Vorlagebehälter 37 verbinden, sowie die Gaspumpe 6, die über die Gasleitung 61 mit dem Kathodenraum 31 verbunden ist und Ventile 4, die in Abhängigkeit ihrer Ansteuerung den Kathodenraum 31 bzw. den Anodenraum 32 von in dem Vorlagebehälter 36 bzw. dem weiteren Vorlagebehälter 37 befindlichen Katholyten bzw. Anolyten durchströmen lassen können oder den Katholyten bzw. Anolyten über die Leitung 33 bzw. 35 der Bleicheinrichtung zeitversetzt zuführen können.

Fig. 4 zeigt eine Teilansicht eines wasserführenden elektrischen Geräts gemäß einer dritten Ausführungsform. Das in Fig. 4 gezeigte wasserführende elektrische Gerät 1 entspricht dem in Fig. 3 gezeigten wasserführenden elektrischen Gerät mit dem Unterschied, dass in die Leitung 33 aus der Dosiereinrichtung 8 über die Dosierleitung 8 ein Bleichaktivator in die Leitung 33 und über die Leitung 33 in die Bleicheinrichtung dosierbar ist.

### Bezugszeichenliste

- 1: Gerät
- 2: Bleicheinrichtung
- 3: elektrochemische Zelle
- 4: Ventil
- 5: Wasserzufuhrleitung
- 6: Gaspumpe
- 7: Dosiereinrichtung
- 8: weitere Dosiereinrichtung
- 9: Wassertank
- 10: Pumpe
- 21: Laugenbehälter
- 22: Trommel
- 31: Kathodenraum
- 32: Anodenraum
- 33: Zufuhrleitung
- 34: Ablaufleitung
- 35: weitere Zufuhrleitung
- 36: Vorlagebehälter
- 37: weiterer Vorlagebehälter
- 38: Leitung
- 39: weitere Leitung
- 40: weitere Leitung
- 61: Gaszufuhrleitung
- 71: weitere Zufuhrleitung
- 81: Dosierleitung

## Patentansprüche

1. Verfahren zum Betreiben eines wasserführenden elektrischen Geräts (1) mit einer Bleicheinrichtung (2) und einer elektrochemischen Zelle (3) mit einer in einem Kathodenraum (31) angeordneten Kathode und einer in einem Anodenraum (32) angeordneten Anode, die räumlich getrennt sind, aufweisend folgende Schritte während eines Reinigungsprogramms, das einen Waschvorgang und einen oder mehrere Spülvorgänge aufweist
a) Bereitstellen einer Lösung in der elektrochemischen Zelle (3), die Wasser und einen Elektrolyten aufweist;
b) Anlegen von Strom an die elektrochemische Zelle (3) und gleichzeitiges Einleiten eines sauerstoffhaltigen Gases, um ein Bleichmittel in einem Katholyten zu erzeugen; und
c) Zuführen des Katholyten aus der elektrochemischen Zelle (3) in die Bleicheinrichtung (2) vor und/oder während der Durchführung des Waschvorgangs.

2. Verfahren nach Anspruch 1, **gekennzeichnet durch** einen Schritt Zuführen des in dem Schritt b) erzeugten Anolyten aus der elektrochemischen Zelle (3) in die Bleicheinrichtung (2) nach der Durchführung eines Waschvorgangs, bevorzugt vor und/oder während der Durchführung eines Spülvorgangs, oder einen Schritt Leiten des in dem Schritt b) erzeugten Anolyten aus der elektrochemischen Zelle (3) in einen Abwasserkanal.

3. Verfahren nach Anspruch 1 oder 2, **dadurch gekennzeichnet, dass** der in Schritt b) hergestellte Katholyt in einem Vorlagebehälter (36) bevorratet wird und/oder der in Schritt b) hergestellte Anolyt in einem weiteren Vorlagebehälter (37) bevorratet wird.

4. Verfahren nach einem der vorangehenden Ansprüche, **gekennzeichnet durch** einen Schritt Zuführen eines Bleichaktivators in die elektrochemische Zelle und/oder in die Bleicheinrichtung.

5. Wasserführendes elektrisches Gerät (1) mit einer Bleicheinrichtung (2), einer elektrochemischen Zelle (3) mit einer in einem Kathodenraum (31) angeordneten Kathode und einer in einem Anodenraum (32) angeordneten Anode, die räumlich getrennt sind, und einer Steuer- oder Regeleinrichtung, die eingerichtet und ausgebildet ist, einen in dem Kathodenraum (31) bei Betrieb der elektrochemischen Zelle erzeugten Katholyten aus der elektrochemischen Zelle (3) der Bleicheinrichtung (2) zuzuführen.

6. Wasserführendes elektrisches Gerät (1) nach Anspruch 5, **dadurch gekennzeichnet, dass** die Steuer- oder Regeleinrichtung eingerichtet und ausgebildet ist, einen bei Betrieb der elektrochemischen Zelle in dem Anodenraum (32) erzeugten Anolyten aus der elektrochemischen Zelle (3) der Bleicheinrichtung (2) zeitversetzt zum Katholyten zuzuführen oder aus dem wasserführenden elektrischen Gerät (1) zu entfernen.

7. Wasserführendes elektrisches Gerät (1) nach Anspruch 5 oder 6, **dadurch gekennzeichnet, dass** der Kathodenraum (31) über eine Leitung (33) mit der Bleicheinrichtung (2) verbunden ist und der Anodenraum (32) über eine Leitung (34) mit einem zu dem wasserführenden elektrischen Gerät (1) externen Abwasserkanal verbunden ist oder dass der Kathodenraum (31) über eine Leitung (33) mit der Bleicheinrichtung (2) verbunden ist und der Anodenraum (32) mit der Bleicheinrichtung (2) verbunden ist.

8. Wasserführendes elektrisches Gerät (1) nach einem der Ansprüche 5 bis 7, **gekennzeichnet durch** einen Vorlagebehälter (36), der fluidtechnisch zwischen dem Kathodenraum (31) und der Bleicheinrichtung (2) angeordnet ist, und/oder einen weiteren Vorlagebehälter (37), die der fluidtechnisch zwischen dem Anodenraum (32) und der Bleicheinrichtung (2) angeordnet ist.

9. Wasserführendes elektrisches Gerät (1) nach einem der Ansprüche 5 bis 8, **gekennzeichnet durch** einen Wassertank (9), der mit der elektrochemischen Zelle (3) verbunden ist, so dass der elektrochemischen Zelle (3) Wasser aus dem Wassertank (9) zuführbar ist und/oder durch eine Dosiereinrichtung (7), die mit der elektrochemischen Zelle (3) verbunden ist.

10. Wasserführendes elektrische Gerät (1) nach einem der Ansprüche 5 bis 9, **dadurch gekennzeichnet, dass** es als ein Waschautomat, ein Geschirrspüler oder Desinfektor ausgebildet ist.
